# EUROPEAN PATENT APPLICATION

(11) **EP 2 086 163 A2**
(43) Date of publication of application: **05.08.2009**
(21) Application number: 08022421.5
(22) Date of filing: 23.12.2008
(51) Int. Cl.: H04L 9/32

(54) **Signature device, verification device, program, signature method, verification method, and system**

(30) Priority: 31.01.2008 JP 2008021790
(71) Applicant: Hitachi Kokusai Electric Inc., Tokyo 101-8980 (JP)
(72) Inventor: Hakuta, Keisuke, Tokyo 100-8220 (JP); Sato, Hisayoshi, Tokyo 100-8220 (JP); Owada, Toru, Tokyo 100-8220 (JP); Nakabayashi, Sumie, Kodaira-shi Tokyo (JP); Kuwabara, Munemitsu, Kodaira-shi Tokyo (JP); Ogura, Shinya, Kodaira-shi Tokyo (JP); Takada, Tomomi, Kodaira-shi Tokyo (JP)
(74) Representative: Strehl Schübel-Hopf & Partner

(57) **Abstract**

An efficient signature technology is provided, which is capable of arbitrary extraction and storage from a plurality of pieces of data and which can make a signature length relatively short. In a signature device (180), a mathematical function computing unit (190) repeats processing of calculating a hash value from a coupled value obtained by coupling together hash values calculated from each of the plurality of pieces of data to calculate one hash value (h), and calculates a signature value from the calculated one hash value. Then, a signature processing unit (189) generates, for one piece of data contained in the plurality of pieces of data, a signature containing the calculated signature value and a hash value coupled to another hash value calculated from the one piece of data before the one hash value (h) is calculated.

## Description

### INCORPORATION BY REFERENCE

This application claims priority based on a Japanese patent application, No. 2008-021790 filed on January 31, 2008, the entire contents of which are incorporated herein by reference.

### BACKGROUND OF THE INVENTION

The present invention relates to a technology of generating a signature from a plurality of pieces of data and verifying the generated signature.

In a video monitoring system which collectively monitors remote places by installing monitoring cameras in areas to be monitored, and transmitting videos taken by the monitoring cameras to a monitoring center such as a security company through the Internet, there is a demand for application of a digital signature so that a video of a large data size (e.g., JPEG or MPEG) can be stored in an accumulation server installed in the monitoring center for a long period of time, and evidence admissibility of the stored video can be secured.

In particular, in a medium/small size video monitoring system, efforts to reduce costs impose a limit on a capacity of the accumulation server. When video data is extracted to be stored, or a device on a monitoring side requests transmission of a part of video data, generally, data is extracted from continuous video data to be, for example, transmitted to the device on the monitoring side.

As a signature technology applicable when such video data is extracted to be stored, for example, there is available a technology described in Japanese Patent Laid-open Publication No. 2007-28014.

According to the technology described in Japanese Patent Laid-open Publication No. 2007-28014, data selected to be extracted and stored, a hash value of data unselected to be extracted and stored, and a signature value generated from hash values of all pieces of data are transmitted as signed data to a server on a signature verification side.

The server on the signature verification side calculates a hash value of the selected data, and couples the hash value of the selected data with the hash value of the unselected data to perform signature verification.

### SUMMARY OF THE INVENTION

According to the technology described in Japanese Patent Laid-open Publication No. 2007-28014, the data selected to be extracted and stored, the hash value of the data unselected to be extracted and stored, and the signature value generated from the hash values of all the pieces of data are transmitted as signed data to the server on the signature verification side. Thus, when the number of pieces of data to be signed is large, a signature length becomes longer. There is a problem that the longer signature length takes up much of a storage area, greatly affecting efficiency of transmission/reception adversely, and extending a period of time for signature verification.

The present invention provides an efficient signature technology which is capable of arbitrary extraction and storage from a plurality of pieces of data and which can make a signature length relatively short.

In order to solve the above-mentioned problem, according to the present invention, processing of calculating a hash value from a coupled value obtained by coupling together hash values calculated from each of the plurality of pieces of data is repeated to calculate one hash value, a signature value is calculated from the calculated one hash value, and a signature is generated from information for specifying the signature value and the hash values coupled before the signature value is calculated.

For example, according to the present invention, a signature device which generates a signature for each of a plurality of pieces of data, includes a control unit. The control unit performs: first processing of calculating a hash value from the each of the plurality of pieces of data; second processing of repeating processing of calculating a hash value from a coupled value obtained by coupling together calculated hash values to calculate one hash value; third processing of calculating a signature value from the one hash value by using a signing key; and fourth processing of generating, for one piece of data contained in the plurality of pieces of data, a signature containing the signature value and all hash values each of which coupled to each of another hash value calculated including the one piece of data until the one hash value is calculated.

Thus, the present invention can provide the efficient signature technology which is capable of the arbitrary extraction and storage from the plurality of pieces of data and which can make the signature length relatively short.

These and other benefits are described throughout the present specification. A further understanding of the nature and advantages of the invention may be realized by reference to the remaining portions of the specification and the attached drawings.

### BRIEF DESCRIPTION OF THE DRAWINGS

In the accompanying drawings:
FIG. 1 is a schematic diagram of a video monitoring system;
FIG. 2 is a schematic diagram of a signature device;
FIG. 3 is a schematic diagram illustrating signature generation processing;
FIG. 4 is a schematic diagram of a computer;
FIG. 5 is a schematic diagram of a verification device;
FIG. 6 is a schematic diagram illustrating verification processing;
FIG. 7 is a flowchart illustrating processing of generating signed video data;
FIG. 8 is a flowchart illustrating processing of calculating a sequence of numbers for specifying a hash value contained in a signature;
FIG. 9 is a flowchart illustrating verification processing for the signed video data;
FIG. 10 is a schematic diagram illustrating signature generation processing;
FIG. 11 is a schematic diagram illustrating verification processing;
FIG. 12 is a schematic diagram of a signature device;
FIG. 13 is a flowchart illustrating signature generation processing executed in the signature device;
FIG. 14 is a schematic diagram illustrating a format of *Datainfo;
FIG. 15 is a schematic diagram illustrating a format of a signature storage area;
FIG. 16 is a schematic diagram illustrating a format of ID_{I};
FIG. 17 is a flowchart illustrating verification processing;
FIG. 18 is a schematic diagram illustrating a format of s [i] ; and
FIG. 19 is a schematic diagram illustrating a verification key management method.

### DESCRIPTION OF THE EMBODIMENTS

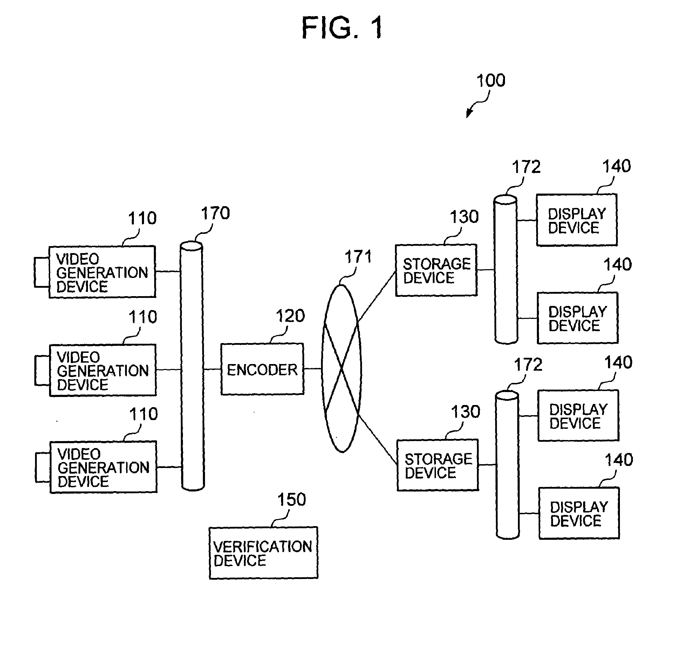

FIG. 1 is a schematic diagram of a video monitoring system 100 according to a first embodiment of the present invention.

As illustrated, the video monitoring system 100 includes a video generation device 110, an encoder 120, an accumulation device 130, a display device 140, and a verification device 150. The video generation device 110 and the encoder 120 can transmit and receive information with each other via a network 170. The encoder 120 and the accumulation device 130 can transmit and receive information with each other via a network 171. The accumulation device 130 and the display device 140 can transmit and receive information with each other via a network 172.

According to this embodiment, the verification device 150 is not coupled to any one of the networks 170 to 172. However, the verification device 150 can be coupled to at least one of the networks 170 to 172.

The video generation device 110 includes a video processing unit (not shown) including a camera equipped with an image pickup element.

The video generation device 110 has a distribution function of storing video data in a storage unit, and distributing the video data via the network 171 to at least one of another video generation device 110, the accumulation device 130, and the display device 140 in response to a request from at least one of another video generation device 110, the accumulation device 130, and the display device 140 or based on judgment of the video generation device 110 itself. The judgment of the video generation device 110 indicates, for example, a case where a moving object is detected based on a difference.

The encoder 120 has a function of converting video data into a format suited to network transmission. For example, when the video data is an analog signal, the encoder 120 performs digital conversion processing, or compression processing according to a transmission band of the network 171.

This embodiment has been described in a manner that the video generation device 110 and the encoder 120 are separate devices. However, the video generation device 110 and the encoder 120 may be realized in the same device (casing).

The accumulation device 130 includes a storage control unit (not shown) which receives video data distributed from the video generation device 110 or another accumulation device 130 to store the video data in a storage unit.

The storage control unit of the accumulation device 130 can arbitrarily extract at least one of a plurality of pieces of received video data to store the video data in the storage unit. The video data that have not been extracted is discarded without being stored in the storage unit. When extraction and storage are carried out, setting of the number of pieces of video data to be extracted and stored may be accepted by the accumulation device 130, or the number of pieces of video data may be determined by the video generation device 110 to be set in the accumulation device 130.

The accumulation device 130 has a distribution function of distributing video data to another accumulation device 130 or the display device 140 via the network 172 in response to a video request from at least one of another accumulation device 130 and the display device 140, or based on judgment of the accumulation device 130 itself.

The display device 140 includes a display processing unit (not shown) which controls processing of receiving video data from the accumulation device 130 to display the video data. The display processing unit can arbitrarily extract at least one of a plurality of pieces of received video data to store the video data in a storage unit. Video data that has not been extracted is discarded. When extraction and storage are carried out, setting of the number of pieces of video data to be extracted and stored may be accepted by the display device 140, or the number of pieces of video data may be determined by the video generation device 110 or the accumulation device 130 to be set in the display device 140.

In this embodiment, any one of the video generation device 110, encoder 120, accumulation device 130, and display device 140 described above further includes functional units of a signature device 180 described below to be used as the signature device 180.

In other words, signed video data generated in any one of the video generation device 110, the encoder 120, the accumulation device 130, and the display device 140 is extracted to be stored in any one of the video generation device 110, the encoder 120, the accumulation device 130, and the display device 140, and the extracted and stored signed video data is verified by the verification device 150 as described below. As a result, validity of the video data can be proved.

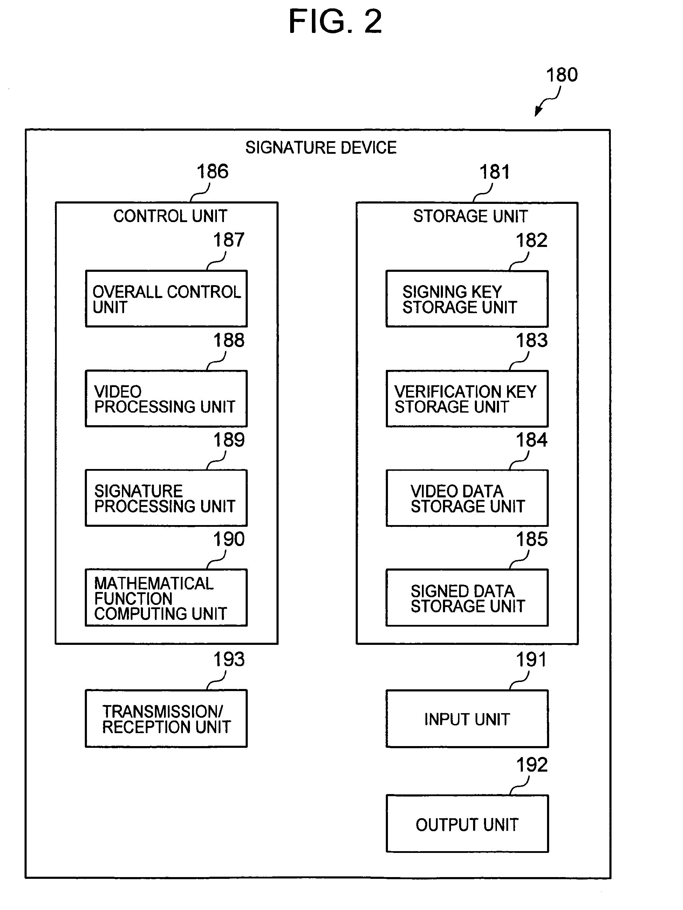

FIG. 2 is a schematic diagram of the signature device 180.

As illustrated, the signature device 180 includes a storage unit 181, a control unit 186, an input unit 191, an output unit 192, and a transmission/reception unit 193.

The storage unit 181 includes a signing key storage unit 182, a verification key storage unit 183, a video data storage unit 184, and a signed data storage unit 185.

The signing key storage unit 182 stores a signing key sk for adding a signature to video data.

The verification key storage unit 183 stores a verification key pk for verifying the signature generated by using the signing key sk.

The video data storage unit 184 stores a plurality of pieces of video data taken by the video generation device 110 and converted into a predetermined data format.

The signed data storage unit 185 stores signed video data generated from the video data by a signature processing unit 189 described below.

The control unit 186 includes an overall control unit 187, a video processing unit 188, the signature processing unit 189, and a mathematical function computing unit 190.

The overall control unit 187 controls overall processing in the signature device 180.

The video processing unit 188 stores video data taken by the video generation device 110 in the video data storage unit 184.

The signature processing unit 189 adds a signature to the video data stored in the video data storage unit 184 to generate signed video data, and to store the signed video data in the signed data storage unit 185.

The mathematical function computing unit 190 calculates a hash value of input data by using a predetermined hash function.

The mathematical function computing unit 190 generates a signature value of input data by using a predetermined signature generation function (mathematical function) and the signing key sk stored in the signing key storage unit 182.

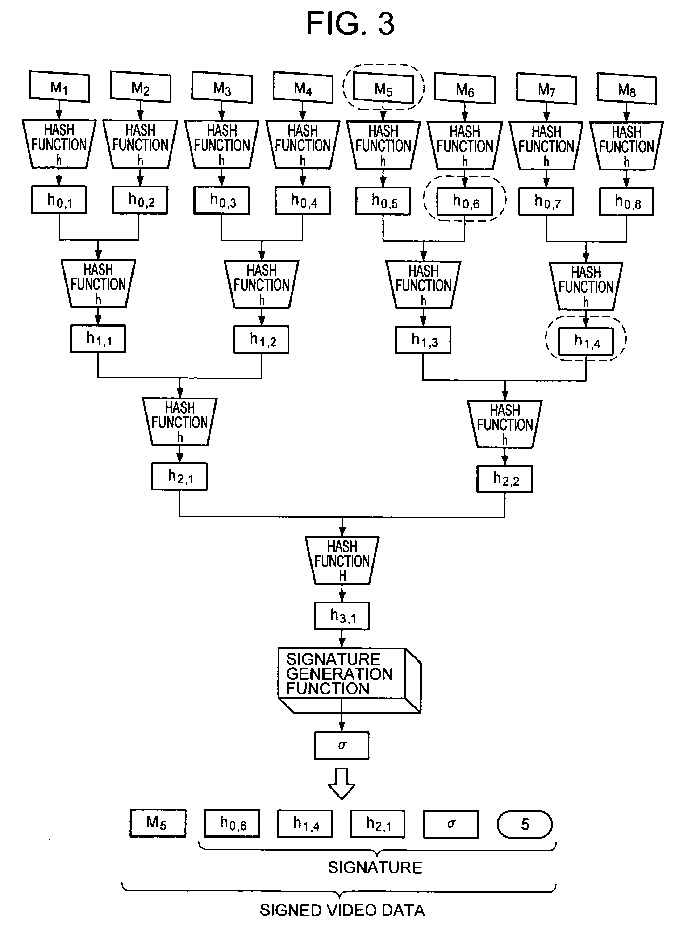

Referring to FIG. 3 (schematic diagram illustrating signature generation processing), an outline of processing of generating signed video data executed in the signature processing unit 189 and the mathematical function computing unit 190 according to this embodiment is given.

In FIG. 3, signed video data are generated with respect to eight pieces of video data M₁, M₂, ..., and M₈.

In this embodiment, as illustrated, a hash-tree structure in which two hash values calculated from the video data are coupled together to calculate another hash value is employed.

First, the signature processing unit 189 adds serial natural numbers of 1 to 8 to each piece of video data stored in the video data storage unit 184 to set the video data M₁, M₂, ..., and M₈, and inputs each piece of video data Mᵢ (i=1, 2, ..., 8) to the mathematical function computing unit 190 to calculate 0-th level hash values h_{0,i} of each piece of video data Mᵢ.

Then, the signature processing unit 189 calculates values h_{0,j} | |h_{0,j+1} (j is odd natural number) sequentially coupling together two hash values h₀,ᵢ of each piece of video data Mᵢ to calculate 1st level hash values h_{1,i}. At the 1st level, four (=8/2) hash values are calculated because two 0-th level hash values are coupled together.

As described above, the signature processing unit 189 repeats the processing of calculating hash values with respect to h_{k,j} | | h_{k,j+1} coupling together two k-th level hash values until the number of hash values becomes one, and inputs a lastly calculated hash value h_{3,1} and the signing key sk stored in the signing key storage unit 182 to the mathematical function computing unit 190. Then, the mathematical function computing unit 190 calculates a signature value σ from the hash value h_{3,1} by using the signing key sk.

The signature processing unit 189 generates signatures containing the hash value coupled to the hash value calculated from arbitrary video data Mᵢ, the calculated signature value σ, and information specifying numbers of the video data Mᵢ (positions of input to hash tree), and adds the signatures to the video data Mᵢ to generate signed video data.

For example, presuming that video data for which signed video data is to be generated is M₅, hash values coupled to hash values (in FIG. 3, h_{0,5}, h₁,₃, and h₂,₂) calculated from the video data M₅ are h_{0,6}, h_{1,4}, and h_{2,1}, and thus these hash values are contained in a signature. These hash values are contained in the signature so that an order of coupling to the hash values calculated from the video data M₅ can be known (in this embodiment, contained in signature in coupling order).

The plurality of pieces of video data M₁, ..., and M₈ does not necessarily correspond to videos which are time-sequentially continuous.

Referring back to FIG. 2, the input unit 191 receives input of information.

The output unit 192 outputs information.

The transmission/reception unit 193 is an interface which transmits/receives information via the network.

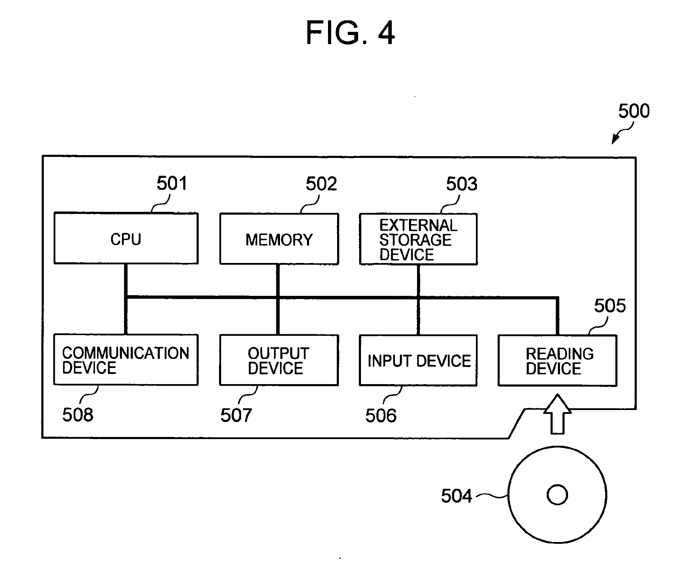

The signature device 180 described above can be realized by, for example, as illustrated in FIG. 4 (schematic diagram of computer 500), the general computer 500 which includes a central processing unit (CPU) 501, a memory 502, an external storage device 503 such as a hard disk drive (HDD), a reading device 505 which reads information from a portable storage medium 504 such as a compact disk read-only memory (CD-ROM) or a digital versatile disk read-only memory (DVD-ROM) , an input device 506 such as a keyboard or a mouse, an output device 507 such as a display, and a communication device 508 such as a network interface card (NIC) which enables coupling to a communication network.

For example, the storage unit 181 can be realized in a manner that the CPU 501 uses the memory 502 or the external storage device 503. The control unit 186 can be realized by loading a predetermined program stored in the external storage device 503 to the memory 502 to execute the predetermined program by the CPU 501. The input unit 191 can be realized in a manner that the CPU 501 uses the input device 506. The output unit 192 can be realized in a manner that the CPU 501 uses the output device 507. The transmission/reception unit 193 can be realized in a manner that the CPU 501 uses the communication device 508.

The predetermined program may be downloaded from the storage medium 504 via the reading device 505 or from the network via the communication device 508 to the external storage device 503, and loaded to the memory 502 to be executed by the CPU 501. Alternatively, the predetermined program may be directly loaded from the storage medium 504 via the reading device 505 or from the network via the communication device 508 to the memory 502 to be executed by the CPU 501.

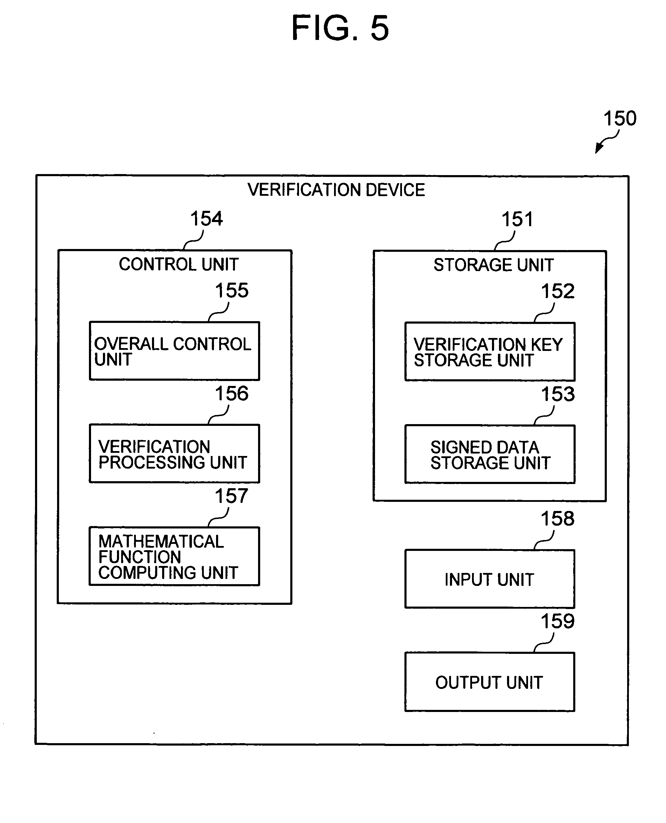

FIG. 5 is a schematic diagram of the verification device 150.

As illustrated, the verification device 150 includes a storage unit 151, a control unit 154, an input unit 158, and an output unit 159.

The storage unit 151 includes a verification key storage unit 152 and a signed data storage unit 153.

The verification key storage unit 152 stores the verification key pk for verifying signed video data generated by the signature device 180.

The signed data storage unit 153 stores the signed video data generated by the signature device 180.

The control unit 154 includes an overall control unit 155, a verification processing unit 156 and a mathematical function computing unit 157.

The overall control unit 155 controls overall processing in the verification device 150.

The verification processing unit 156 verifies the signed video data stored in the signed data storage unit 153.

The mathematical function computing unit 157 calculates a hash value of input data by using a predetermined hash function.

The mathematical function computing unit 157 generates decrypted data from an input signature value by using a predetermined signature verification function and the verification key pk stored in the verification key storage unit 152.

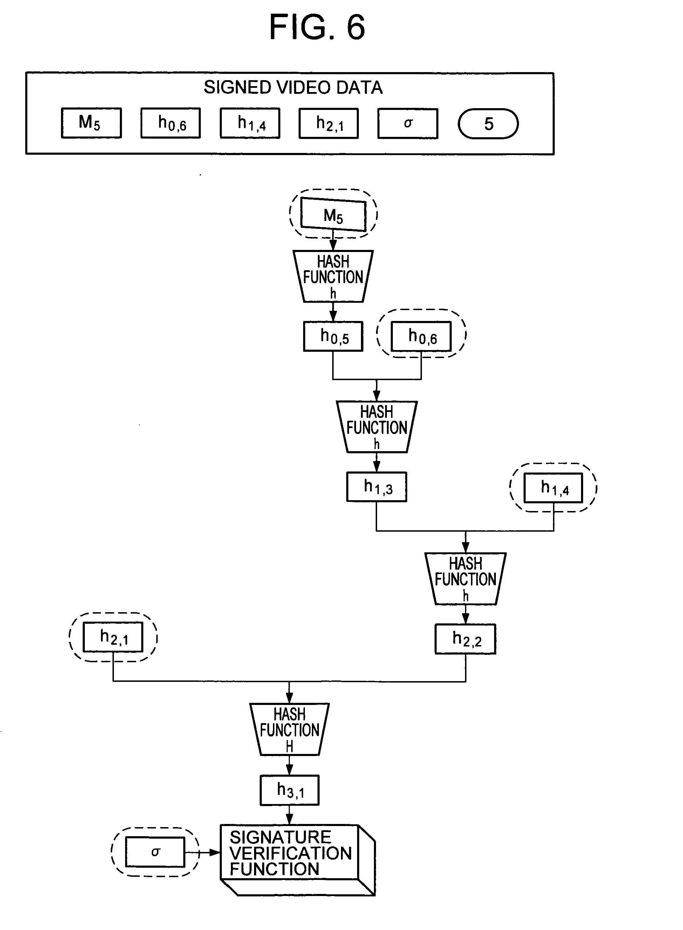

Referring to FIG. 6 (schematic diagram illustrating verification processing), an outline of processing of verifying signed video data executed in the verification processing unit 156 and the mathematical function computing unit 157 according to this embodiment is given.

Referring to FIG. 6, an example in which a signature Sᵢ generated from one piece of video data Mᵢ of the eight pieces of video data M₁, M₂, ..., and M₈ illustrated in FIG. 3 is verified is described.

First, the verification processing unit 156 extracts the video data Mᵢ from signed video data, and inputs the video data Mᵢ to the mathematical function computing unit 157 to calculate a 0-th level hash value h_{0,i} of the hash tree.

The verification processing unit 156 extracts a 0-th level hash value h_{0,a} (a=i+1 when i is odd number, and a=i-1 when i is even number) of the hash tree from the signed data, couples the 0-th level hash value h_{0,a} to the calculated hash value ho,i (h_{0,i} | | h_{0,a} when i is odd number, and h_{0,a} | | h_{0,i} when i is even number), and inputs the coupled hash value to the mathematical function computing unit 157 to calculate a 1st level hash value h_{1,i} of the hash tree.

For example, in the example of FIG. 6, a hash value h_{1,3} is calculated from a value (h_{0,5} | | h_{0,6}) obtained by coupling a hash value h_{0,6} contained in the signed video data to a hash value h_{0,5} calculated from the video data M₅.

The verification processing unit 156 repeats the processing described above until all hash values contained in the signed video data are coupled to calculate a hash value h_{3,1} in the end.

The verification processing unit 156 inputs the signature value σ contained in the signed video data and the verification key pk stored in the verification key storage unit 152 to the mathematical function computing unit 157. Then, the mathematical function computing unit 157 calculates a verification value from the signature value σ by using the verification key pk.

The verification processing unit 156 judges, when the calculated hash value h_{3,1} matches the calculated verification value, that validity of the video data Mᵢ has been verified.

Referring back to FIG. 5, the input unit 158 receives input of information.

The output unit 159 outputs information.

The verification device 150 described above can be realized by, for example, the general computer 500 as illustrated in FIG. 4.

For example, the storage unit 151 can be realized in a manner that the CPU 501 uses the memory 502 or the external storage device 503. The control unit 154 can be realized by loading a predetermined program stored in the external storage device 503 to the memory 502 to execute the predetermined program by the CPU 501. The input unit 158 can be realized in a manner that the CPU 501 uses the input device 506. The output unit 159 can be realized in a manner that the CPU 501 uses the output device 507.

The predetermined program may be downloaded from the storage medium 504 via the reading device 505 or from the network via the communication device 508 to the external storage device 503, and loaded to the memory 502 to be executed by the CPU 501. Alternatively, the predetermined program may be directly loaded from the storage medium 504 via the reading device 505 or from the network via the communication device 508 to the memory 502 to be executed by the CPU 501.

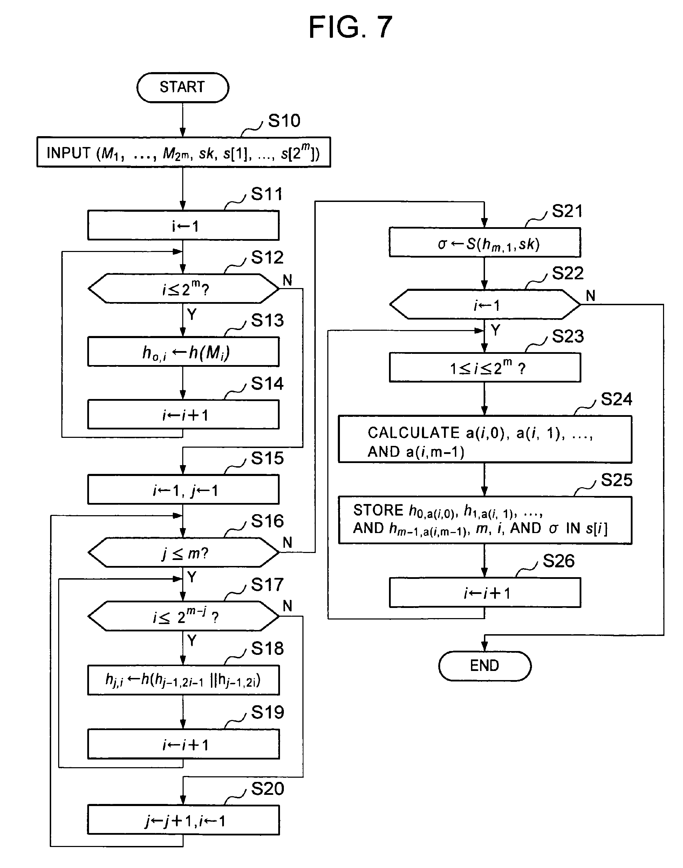

FIG. 7 is a flowchart illustrating the processing of generating signed video data by the signature device 180.

First, the signature processing unit 189 of the signature device 180 obtains a plurality of pieces of video data M₁, ..., and Mₖ (k is a natural number of 2^{m}, and m is a natural number of 1 or larger) from the video data storage unit 184, and the signing key sk from the signing key storage unit 182 to secure signature storage areas s[1], ..., and s[k] in the storage unit 181 (S10).

Then, the signature processing unit 189 substitutes 1 for a counter i (S11).

The signature processing unit 189 judges whether or not i≤k (=2^{m}) is established (S12), and proceeds to Step S13 if i≤k is established (Yes in Step S12), or to Step S15 if i≤k is not established (No in Step S12).

In Step S13, the mathematical function computing unit 190 calculates a hash value h_{0,i}=h(Mᵢ) of the video data Mᵢ. Here, h denotes a cryptographic hash function such as SHA-256.

The signature processing unit 189 increments i by 1 (i←i+1) (S14), and returns to Step S12 to repeat the processing.

In Step S15, the signature processing unit 189 substitutes 1(i←1) for the counter i, and 1(j←1) for a counter j.

The signature processing unit 189 judges whether or not j≤m is established (S16), and proceeds to Step S17 if j≤m is established (Yes in Step S16), or to Step S21 if j≤m is not established (No in Step S16).

In Step S17, the signature processing unit 189 judges whether or not i≤2^{m-j} is established, and proceeds to Step S18 if i≤2^{m-j} is established (Yes in Step S17), or to Step S20 if i≤2^{m-j} is not established (No in Step S17).

In Step S18, the signature processing unit 189 inputs a value (h_{j-1,2i-1} | |h_{j-1,2i}) obtained by coupling together a hash value hⱼ₋₁,₂ᵢ₋₁, and a hash value h_{j-1,2i} to the mathematical function computing unit 190. Then, the mathematical function computing unit 190 calculates a hash value hⱼ=h(h_{j-i,2i-1} | | h_{j-1,2i}).

The signature processing unit 189 increments i by 1 (i←i+1) (S19), and returns to Step S17 to repeat the processing.

In Step S20, the signature processing unit 189 increments j by 1 (j←j+1), resets i to an initial value (i←1), and returns to Step S16 to repeat the processing.

In Step S21, the signature processing unit 189 calculates the signature value σ from a hash value h_{m,1} by using the signing key sk.

The signature processing unit 189 resets i to the initial value (i←1) (S22).

Then, the signature processing unit 189 judges whether or not 1≤i≤2^{m} is established (S23), and proceeds to Step S24 if 1≤i≤2^{m} is established (Yes in Step S23), or finishes the processing if 1≤i≤2^{m} is not established (No in Step S23).

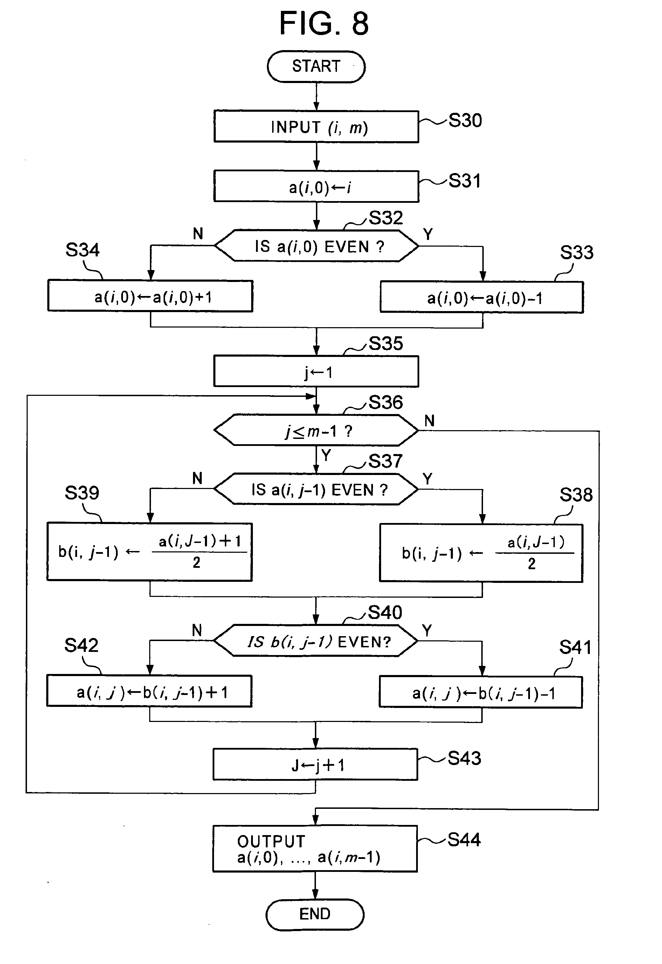

In Step S24, the signature processing unit 189 calculates a(i,0), a (i, 1), ..., and a (i, m-i) by using an algorithm illustrated in FIG. 8 to specify a hash value to be contained in a signature (S24).

The signature processing unit 189 substitutes (h_{0,a(i,0)}, h_{1,a(i}, ₁), ..., h_{m-1,a(i,m-1)}, m, i, σ) for s[i] as signatures of the video data Mᵢ (S25).

FIG. 8 is a flowchart illustrating processing of calculating a sequence of numbers for specifying hash values to be contained in a signature.

First, the signature processing unit 189 specifies a number i allocated to the video data Mᵢ and a logarithm m where 2 of the number k (=2^{m}) of signature targets is a base (S30).

The signature processing unit 189 substitutes i for a(i,0)(a(i,0)←i) (S31).

The signature processing unit 189 judges whether or not a (i, 0) is an even number (S32), and proceeds to Step S33 if a(i,0) is an even number (Yes in Step S32), or to Step S34 if a(i,0) is an odd number (No in Step S32).

In Step S33, the signature processing unit 189 substitutes a(i,0)-1 for a(i,0)(a(i,0)←a(i,0)-1).

In Step S34, the signature processing unit 189 substitutes a(i,0)+1 for a(i,0) (a(i,0)←a(i,0)+1).

Then, the signature processing unit 189 initializes the counter j(j←1) (S35).

The signature processing unit 189 judges whether or not j≤m-1 is established (S36), and proceeds to Step S37 if j≤m-1 is established (Yes in Step S36), or to Step S44 if j≤m-1 is not established (No in Step S36).

In Step S37, the signature processing unit 189 judges whether or not a(i,j-1) is an even number, and proceeds to Step S38 if a(i,j-1) is an even number (Yes in Step S37), or to Step S39 if a(i,j-1) is an odd number (No in Step S37).

In Step S38, the signature processing unit 189 substitutes a(i,j-1)/2 for b(i,j-1) (b(i,j-1)←a(i,j-1)/2).

In Step S39, the signature processing unit 189 substitutes a(i,j-1)-1/2 for b(i,j-1) (b(i,j-1)←a(i,j-1)-1/2).

The signature processing unit 189 judges whether or not b(i,j-1) is an even number (S40), and proceeds to Step S41 if b(i,j-1) is an even number (Yes in Step S40), or to Step S42 if b(i,j-1) is an odd number (No in Step S40).

In Step S41, the signature processing unit 189 substitutes b(i,j-1)-1 for a(i,j) (a(i,j)←b(i,j-1)-1).

In Step S42, the signature processing unit 189 substitutes b(i,j-1)+1 for a(i,j) (a(i,j)←b(i,j-1)+1).

The signature processing unit 189 increments j by 1 (j←j+1) (S43), and returns to Step S36 to repeat the processing.

In Step S44, the signature processing unit 189 specifies a hash value based on a calculated sequence of numbers a(i,0), ..., a(i,m-1).

Thus, in the signature device 180, signatures S₁, ..., and Sₖ are generated from the video data M₁, ..., and Mₖ.

When the video data M₁, ..., and Mₖ are extracted and stored in the video generation device 110, the encoder 120, the accumulation device 130 or the display device 140, an arbitrary natural number i (i=1, ..., k) is selected, and a message Mᵢ corresponding to i, and the signature Sᵢ corresponding to the message Mᵢ are stored as signed video data.

For the video data to be extracted and stored, a reference image or video data containing the reference image is used in the case of MPEG 4.

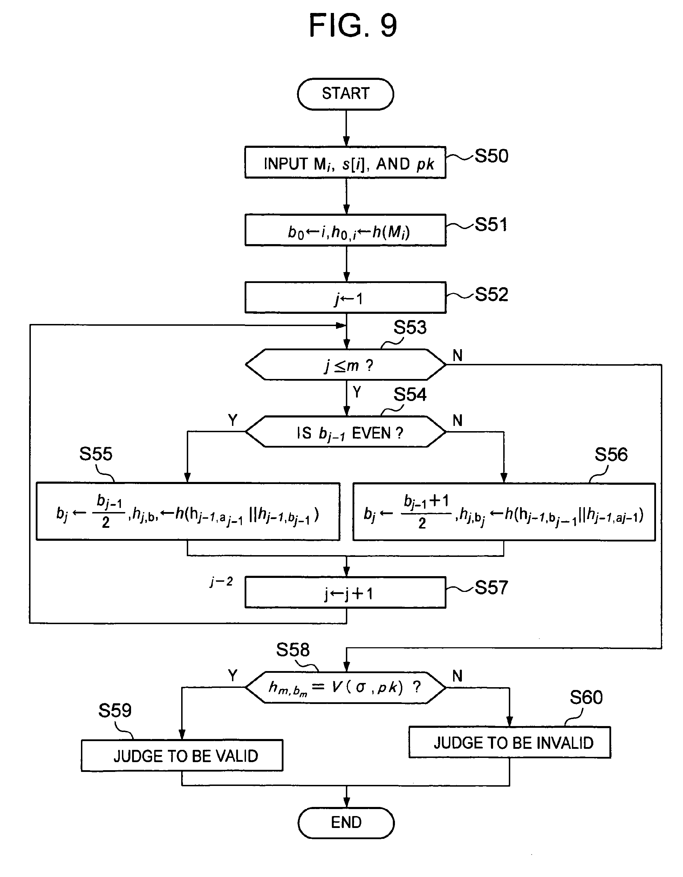

FIG. 9 is a flowchart illustrating verification processing for signed video data (Mi,Si) executed in the verification device 150.

First, the verification processing unit 156 obtains the video data Mᵢ and the signatures Sᵢ=(h_{0,a(i},₀), h_{1,a(i, 1),} h_{2,a(i,2), ...,} h_{m-1,a(i,m-1)}, m, i, σ) from the signed data storage unit 153, and the verification key pk from the verification key storage unit 152 (S50).

The verification processing unit 156 substitutes i for b₀ (b₀←i), and inputs a video message Mᵢ to the mathematical function computing unit 157 to calculate a hash value h_{0,i}=h(Mᵢ) (S51).

The verification processing unit 156 substitutes 1 for the counter j (j←1) (S52).

The verification processing unit 156 judges whether or not j≤m is established (S53), and proceeds to Step S54 if j≤m is established (Yes in Step S53), or to Step S58 if j≤m is not established (No in Step S53).

In Step S54, the verification processing unit 156 judges whether or not bⱼ₋₁ is an even number, and proceeds to Step S55 if bⱼ₋₁ is an even number (Yes in Step S54), or to Step S56 if bⱼ₋₁ is an odd number (No in Step S54).

In Step S55, the verification processing unit 156 substitutes bⱼ₋₁/2 for bⱼ(b_{j←}bⱼ₋ᵢ/2), and calculates a hash value hⱼ,Bⱼ=h(hⱼ₋₁, _{Aj-1} | | hⱼ₋₁,Bⱼ₋₁) by using the mathematical function computing unit 157. In this case, Bⱼ=bⱼ, Bⱼ₋₁=bⱼ₋₁, and Aⱼ₋₁=aⱼ₋₁ apply.

In Step S56, the verification processing unit 156 substitutes (bⱼ₋₁+1)/2 for bⱼ(bⱼ←(bⱼ₋₁+1)/2), and calculates a hash value hj, Bⱼ=h (hⱼ₋₁,Bⱼ₋₁ | | hⱼ₋₁,Aⱼ₋₁) by using the mathematical function computing unit 157. In this case, Bⱼ=bⱼ, Bⱼ₋₁=bⱼ₋₁, and Aⱼ₋₁=aⱼ₋₁ apply.

The verification processing unit 156 substitutes j+1 for j(j←j+1) (S57), and returns to Step S53 to repeat the processing.

In Step S58, the mathematical function computing unit 157 judges whether or not h_{m,Bm}=V(σ, pk) is established by using a signature verification function V, and judges that the hash value is valid if established (Yes in Step S58) (S59), and judges that the hash value is invalid if not established (No in Step S58) (S60). In this case, Bₘ=bₘ applies.

Thus, this embodiment enables easy verification even when the video message Mᵢ and the signature Sᵢ corresponding to the video message Mᵢ are arbitrarily selected to be stored.

In the embodiment described above, the signature S[i] contains a number i. For example, as illustrated in FIG. 6, in verification for signatures (h_{0,6}, h_{1,4}, h_{2,1}, σ, 5), after a hash value h_{0,5} is calculated for the video data M₅, a hash value h₁,₃ is calculated for h_{0,5} | | h_{0,6} obtained by coupling together the calculated hash value h_{0,5} and the hash value h_{0,6} contained in the signature. It is because a coupling order of the calculated hash value h_{0,5} and the hash value h_{0,6} contained in the signature, in other words, an order of h_{0,5} | | h_{0,6} or h_{0,6}| |_{0,5}, has to be determined.

For the same reason, when the signature is verified, to determine a coupling order of hash values, even/odd judgment of bⱼ₋₁ has to be made as illustrated in Step S54 of FIG. 9.

The signature s [i] contains the logarithm m of the number of signature targets where a base is 2. It is because, when generation and verification of a signature described in this embodiment are realized by software, a value indicating how many hash values are contained in the signature s[i] is necessary.

In this embodiment, m is used for judging the number of hash values contained in the signature s[i]. However, the information is not limited to m. Any information or format may be used as long as the number of hash values contained in the signature s[i] can be judged. For example, by changing an order of hash values contained in the signature, such as the signature s [i]=(i, σ, h_{0,a(i,0)}, h_{1,a(i}, ₁₎, h₂,ₐ₍ᵢ, _{2),} ..., h_{m-1,a(i,m-1)}), the number of hash values may be specified. In other words, in such signature format as described above, by predetermining insertion of a hash value from a 4-th component h_{0,a(i,0)} (can be specified by number of bits of data) of the signature s[i], obviously, hₘ₋₁,_{a(i,m-1)} is a last component (end of file (EOF) of signature data s[i]) contained in the signature s [i], and the number of hash values contained in the signature s [i] is m.

In FIGS. 3 and 6, a hash function h is used up to the second level of the hash tree, and a hash function H is used at the third level (last level) of the hash tree. For the hash functions h and H, the same hash function (e.g., SHA-256) may be used, or different hash functions may be used. For example, in application to a real system, the hash function H and the portion of the signature generation function may be replaced by a signature method such as RSA-PSS or ECDSA to be used. When the hash function H and the portion of the signature generation function are replaced by the signature method, a signature is generated including the last level of the hash tree of FIGS. 3 and 6 (h_{2,1}| |_{2,2} in the case of FIGS. 3 and 6, and h_{m-1,11}| |h_{m-1,2} in general case).

In the embodiment described above, the hash values of the video data M₁, ..., and Mₖ (k=2^{m}) are set at the 0-th level of the hash tree. However, the present invention is not limited to this. For example, a hash value of data mᵢ=Mᵢ | | rᵢ coupling a predetermined value rᵢ to each piece of video data Mᵢ (1≤i≤k) may be set at the 0-th level of the hash tree.

For the value rᵢ, an arbitrary value can be used. For example, a MAC address or an IP address of the signature device 180, or time of signature generation (time, day, month, and year) can be used. By using such data mᵢ, not only validity of the video data but also validity of the signature device 180 or the time of the signature generation can be verified. When such a value rᵢ is coupled to the video data Mᵢ, the data mᵢ and the signature sᵢ are extracted and stored as signed data.

In this embodiment, the data to be signed is video data. However, the data to be signed may be other data.

A reason why the signature method according to this embodiment has high security is as follows. By presuming that the signature method (e.g., RSA-PSS or ECDSA) (of hash function H and portion of signature generation function) is cryptographically secure (security can be proved), and a hash function is an ideal random function (random oracle model), and by changing an attack model and a security definition according to the method described above, cryptographic security of the above-mentioned signature generation/verification method for the plurality of pieces of data can be proved (security can be proved).

A reason why the signature method according to this embodiment has high efficiency is as follows. As described above, in public key cryptography, its mathematical function takes longest processing time, and the processing time required for the hash function is considerably short as compared with the processing times required for the mathematical function. Thus, when signatures are generated for a plurality of pieces of video data M₁, ..., and Mₖ, according to this embodiment, a mathematical function (signature function or signature verification function) has to be calculated only once in the signature method described above, and processing time can be shortened.

This embodiment has been described by way of only a case where the number n of signature targets is a power of 2 (k=2^{m}). In addition to the power of 2, signatures can be generated for an arbitrary number of a plurality of pieces of video data.

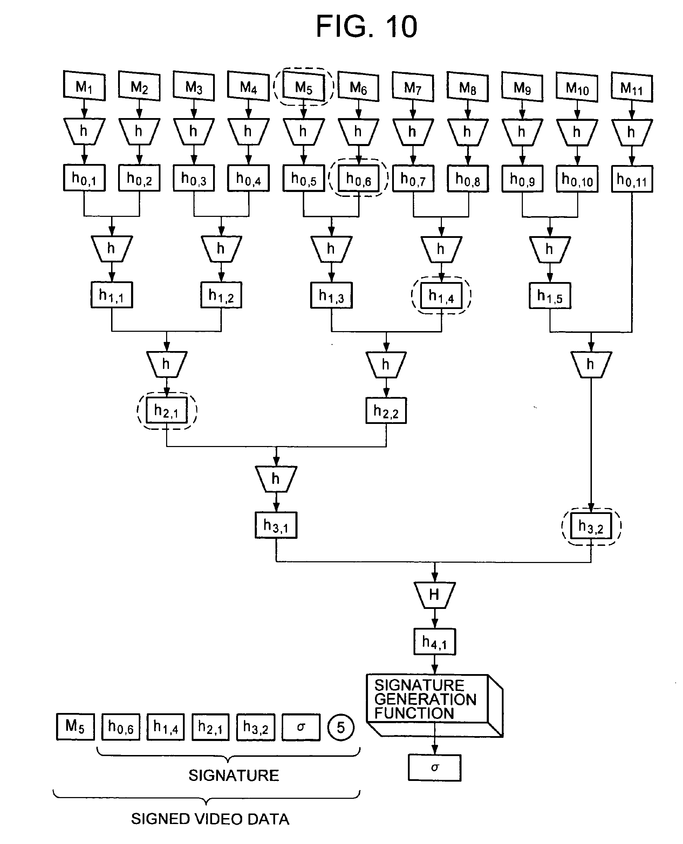

When the number of signature targets is not a power of 2, for example, a method as illustrated in FIG. 10 (schematic diagram illustrating signature generation processing) can be used.

According to the signature generation method illustrated in FIG. 10, one hash value (first hash value) is calculated from the pieces of video data of the number of a maximum power of 2 (M₁ to M₈ in FIG. 10) among a plurality of pieces of signature data (M₁ to M₁₁ in FIG. 10) by the same method as that of FIG. 3, one hash value (second hash value) is calculated from the remaining video data (M₉ to M₁₁ in FIG. 10), and lastly the first and second hash values are coupled together to calculate a hash value to be input to the signature generation function. In this case, for the remaining video data (M₉ to M₁₁ in FIG. 10) excluding the pieces of video data of the number of the maximum power of 2, hash value calculation is carried out until one hash value can be calculated without any coupling at a specific level of the hash tree.

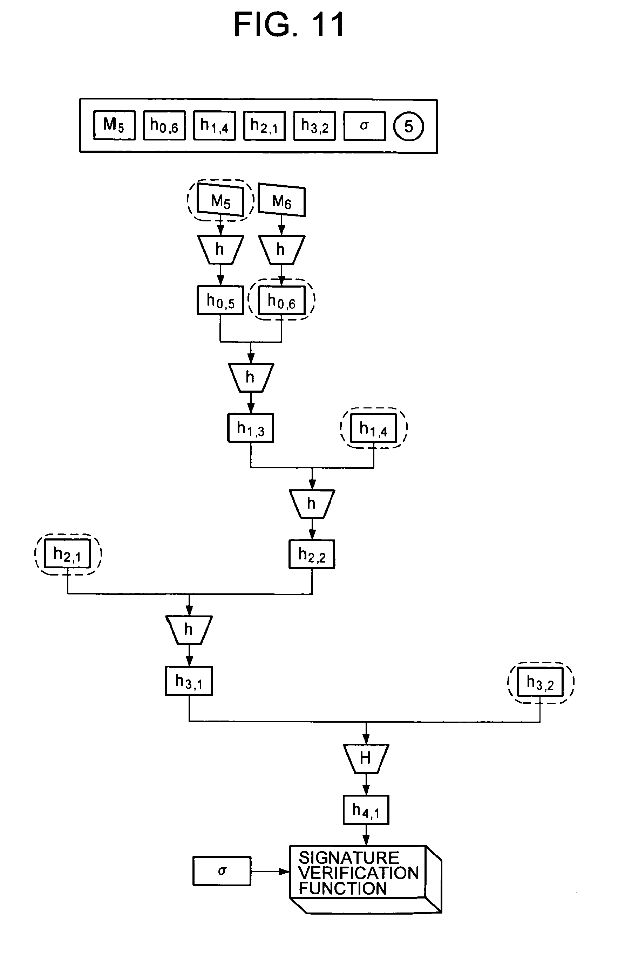

For verification of a signature generated by the signature generation method illustrated in FIG. 10, as illustrated in FIG. 11 (schematic diagram illustrating verification processing), by containing the video data M₅ to be signed, hash values (h_{0,6}, h₁,₄, h_{2,1}, and h_{3,2} in FIG. 11) coupled to a hash value h_{0,5} calculated from the video data M₅, the signature value σ, and a number 5 of the video data M₅ in the signature, verification can be carried out as in the case of FIG. 6.

Next, a second embodiment of the present invention is described.

The second embodiment of the present invention is different from the first embodiment in a signature device 280. Thus, items concerning the signature device 280 is described below.

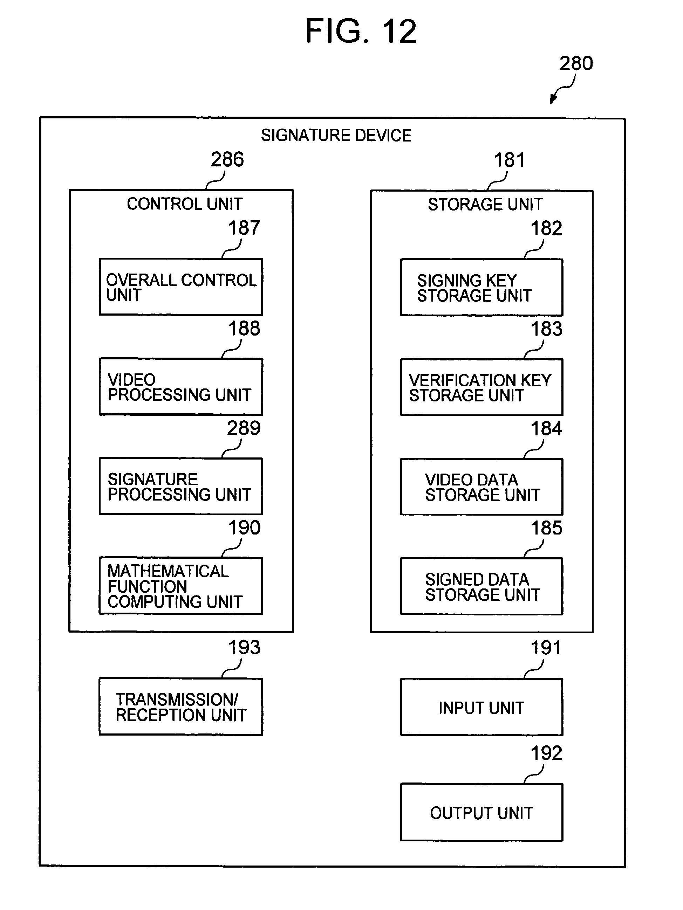

FIG. 12 is a schematic diagram of the signature device 280 according to the second embodiment of the present invention.

As illustrated, the signature device 280 includes a storage unit 181, a control unit 286, an input unit 191, an output unit 192, and a transmission/reception unit 193. The control unit 286 is different from that of the first embodiment. Thus, items concerning the control unit 286 are described below.

The control unit 286 includes an overall control unit 187, a video processing unit 188, a signature processing unit 289, and a mathematical function computing unit 190. The signature processing unit 289 is different from that of the first embodiment. Thus, items concerning the signature processing unit 289 is described below.

The signature processing unit 289 according to this embodiment generates, when the number of pieces of video data stored in a video data storage unit 184 is not a power of 2, new specific data, sets the number of pieces of video data to be signed to a power of 2, and generates a signature by the same method as that of the first embodiment.

In this case, the data newly generated by the signature processing unit 289 may be a predetermined fixed value or a random number.

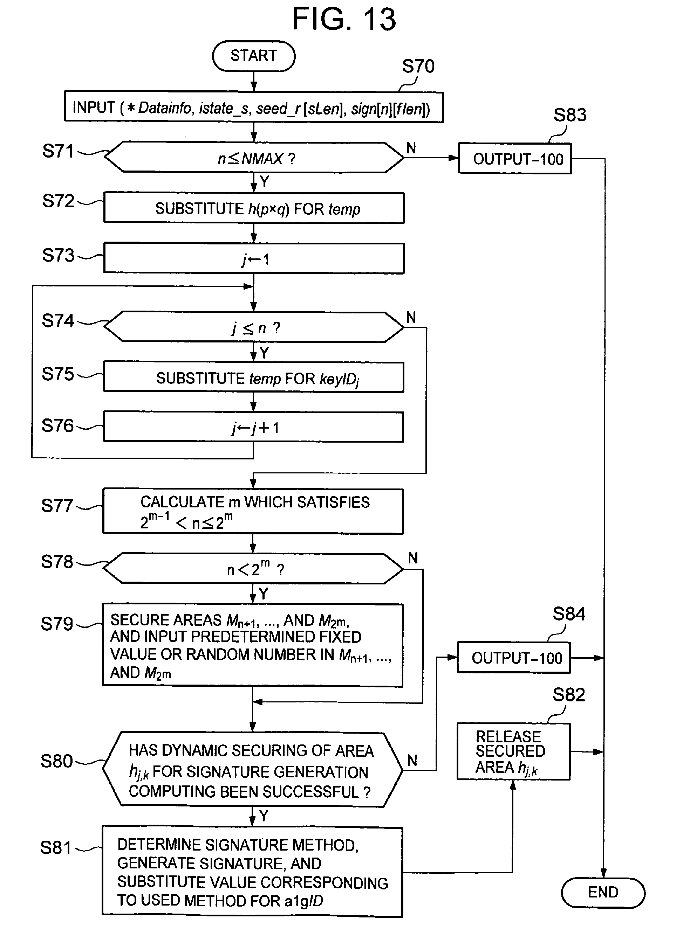

FIG. 13 is a flowchart illustrating signature generation processing executed in the signature device 280.

First, the signature processing unit 289 of the signature device 280 obtains *Datainfo, a signing key istate_s, a random number generation seed seed_r[sLen], and a signature storage area sign[n][fLen] (S70).

A positive integer is set to satisfy fLen=idLen+emLen+hLenxm, where idLen is a byte length of id, emLen is a signature length of a digital signature method (RSA-PSS or ECDSA), hLen is an output byte length of a hash function, and m is a positive integer which satisfies 2^{m-1}<n<=2^{m}.

Generally, the number n of signature targets varies (can vary) from one signature generation to another. Thus, fLen dependent on n can also vary.

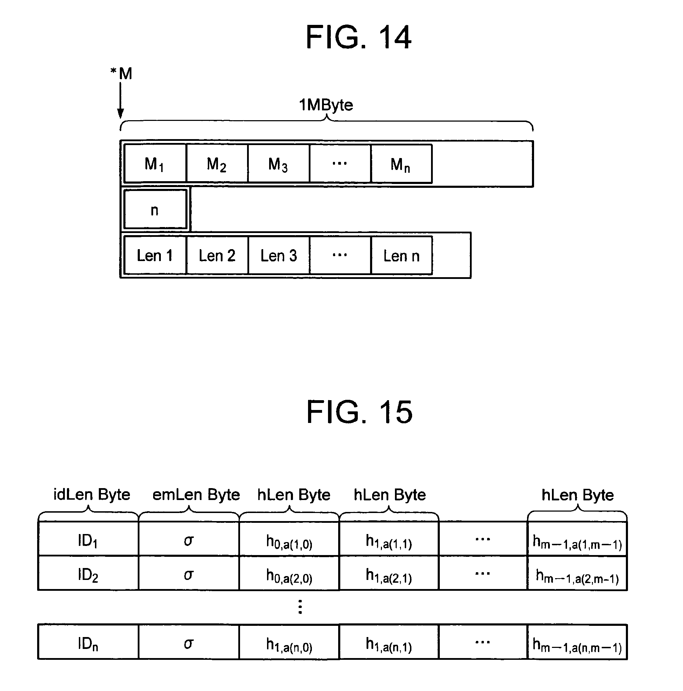

As illustrated in FIG. 14 (schematic diagram illustrating format of *Datainfo), *Datainfo is a storage area for storing a plurality of pieces of video data M₁, ..., and Mₙ to be signed, the number n of signature targets, and a byte length Lenᵢ of each piece of video data Mᵢ described above, and an area size for video data storage is fixed in advance (e.g., 1 Mbytes).

Even if the amount of video data stored in *Datainfo does not reach the area size described above, signatures are generated when the number of signature targets reaches the predetermined number (referred to as NMAX).

The plurality of pieces of video data M₁, ..., and Mₙ are not limited to videos generated by the same video generation device 110, but may be videos generated by a plurality of different video generation devices 110.

The plurality of pieces of video data M₁, ..., and Mₙ are not limited to time-sequentially continuous video data generated by the same video generation device 110. When signatures are generated for the plurality of pieces of time-sequentially continuous video data, before signature generation, the plurality of pieces of time-sequentially continuous video data M₁, ..., and Mₙ only have to be stored in the storage area *Datainfo. For example, in the case of MPEG 4, the plurality of pieces of time-sequentially continuous video data M₁, ..., and Mₙ are stored by a unit called a group of videos (GOV). In this case, Mᵢ may be one frame such as a reference image (Intra-coded frame: I-frame) or a difference image (Predicted frame: P-frame), or one GOV. M₁ may be a reference image, M₂ may be difference images of M₁, M₃ may be a reference image (different from M₁), and M₂ may be difference images of M₃.

The signature storage area sign[n][fLen] has, for example, a format similar to that illustrated in FIG. 15 (schematic diagram illustrating format of signature storage area).

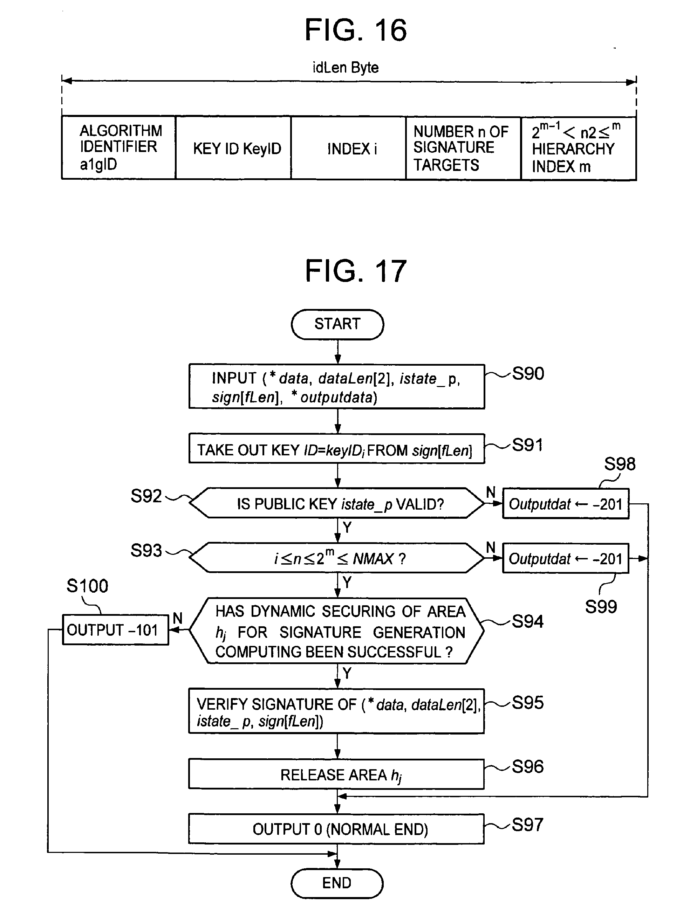

An IDᵢ (i=1, ..., n) portion in the signature storage area illustrated in FIG. 15 has, for example, a format similar to that illustrated in FIG. 16 (schematic diagram illustrating format of IDᵢ).

An algorithm identifier (algID) illustrated in FIG. 16 is an area for storing a value corresponding to a signature method used for signature generation. The value corresponding to the signature method is predetermined to be, for example, 0x00 when there is no signature, 0x01 for RSA-PSS, and 0x02 for ECDSA.

A key ID illustrated in FIG. 16 is an area used for checking whether or not a signing key used for signature generation is valid.

Referring back to FIG. 13, after Step S70, the signature processing unit 289 judges whether or not n≤NMAX is established (S71), and proceeds to Step S72 if n≤NMAX is established (Yes in Step S71), or to Step S83 if n≤NMAX is not established (No in Step S71).

In Step S83, the signature processing unit 289 outputs -100 indicating an error to the output unit 192 to finish the processing.

The signature processing unit 289 substitutes h (pxq) for temp (S72).

The signature processing unit 289 initializes a counter j(j←1) (S73).

The signature processing unit 289 judges whether or not j≤n is established (S74), and proceeds to Step S75 if j≤n is established (Yes in Step S74), or to Step S77 if j≤n is not established (No in Step S74).

In Step S75, the signature processing unit 289 substitutes temp for a key ID (keyIDⱼ).

The signature processing unit 289 increments j by 1 (j←j+1) (S76), and returns to Step S74 to repeat the processing.

In Step S77, the signature processing unit 289 calculates m which satisfies 2^{m-1}≤n≤2^{m}.

The signature processing unit 289 judges whether or not n<2^{m} is established (S78), and proceeds to Step S79 if n<2^{m} is established (Yes in Step S78), or to Step S80 if n<2^{m} is not established (No in Step S78).

In Step S79, the signature processing unit 289 secures areas Mₙ₊₁, ..., and Mₖ (k=2^{m}) in the storage unit 181, and inputs predetermined fixed numbers or random numbers to these areas Mₙ+₁, ..., and Mₖ (k=2^{m}) (S79).

The signature processing unit 289 dynamically secures an area h_{j,k} (1≤j≤m, and 1≤k≤2^{m-j}) for signature generation calculation, and checks whether or not the area has successfully been secured (S80) . The signature processing unit 289 proceeds to Step S81 if the area has successfully been secured (Yes in Step S80), or to Step S84 if the area has not successfully been secured (No in Step S80).

In Step S84, the signature processing unit 289 outputs -100 indicating an error to the output unit 192 to finish the processing.

In Step S81, the signature processing unit 289 determines a signature method, generates signatures for the plurality of pieces of video data M₁, ..., and Mₙ, istate_s, seed_r[sLen], and sign[fLen][1], ..., and sign[fLen][n] by using the algorithm illustrated in FIG. 7, and substitutes a value corresponding to the used signature method for an algorithm identifier.

The signature processing unit 289 releases the area secured in Step S80 (S82) to finish the processing.

In the flowchart described above, areas are secured for all the pieces of data short for a power of 2 in Step S79. Not limited to this, however, for example, an area may be secured when a hash value to be coupled is necessary.

FIG. 17 is a flowchart illustrating verification processing executed in the verification device 150.

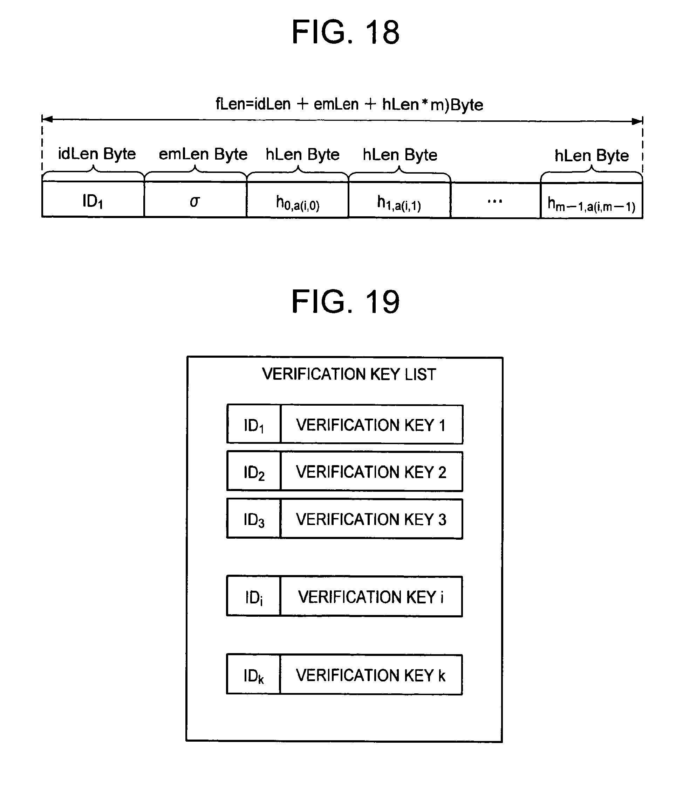

A procedure of calculating whether or not a signature σ is "valid" from s[i] having a format illustrated in FIG. 18 (schematic diagram illustrating format of s [i]) including video data *data and signatures (h_{0,a}(_{i,0}), h_{1,a(i, 1)}, ..., h_{m-1,a(i,m-1),} m, n, i, σ) of the video data *data generated in the signature device 280, and a verification key pk is described.

First, a verification processing unit 156 of the verification device 150 obtains the video data *data, a byte length dataLen of the video data *data, a signature sign[fLen] of the video data *data, and a verification key istate_p (S90).

The verification processing unit 156 takes out a key ID (keyIDⱼ) from sign[fLen] (S91).

The verification processing unit 156 checks validity of the public key istate_p by using the public key istate_p and the keyIDⱼ (S92). The verification processing unit 156 proceeds to Step S93 if valid (Yes in Step S92), or to Step S98 if not valid (No in Step S92).

The checking of validity executed in Step S92 is described by taking an example of using a (normal N=pxq type) RSA as a signature method.

In RSA signature, (p, q, d) is set as a signing key for prime numbers p and q of approximately equal bit lengths and random integers 0≤d<(p-1)x(q-1), and (N, e) is set as a verification key for N=pxq, and e=1/dmod(p-1)x(q-1). N is called an RSA modulus. The keyID_{J} is an area for storing a part (or all parts) of a hash value h(N) of the RSA modulus N beforehand. It is presumed that a part (or all parts) of the hash value h(N) is stored during signature generation.

For checking of validity, h(N) is calculated from the verification key (N, e), and a part (or all parts) of the h(N) is compared with a part (or all parts) of the hash value h(N) of the RSA modulus N stored beforehand in the keyIDⱼ. The verification key is judged to be valid if matched, or the verification key is judged to be invalid (not valid) if not matched. This checking of validity enables checking as to whether or not an input signature has been verified by using the valid verification key.

The keyIDⱼ plays a role of not only checking the validity of the verification key but also efficiently retrieving a verification key necessary for signature verification. In other words, in the signature verification processing, which device has generated the signature has to be checked to efficiently retrieve a verification key of the device which has generated the signature. Thus, the verification device 150 ties a set of a verification key corresponding to a signing key of the plurality of video generation devices 110, the encoder 120, the accumulation device 130 or the display device 140, and a part (or all parts) of h (N) with a string to hold the set as a list by, for example, a method illustrated in FIG. 19 (schematic diagram illustrating verification key management method) beforehand. In this way, during signature verification, a verification key (referred to as verification key i) corresponding to an ID (referred to as IDᵢ) of the verification key list matching the value stored in the keyIDⱼ can be efficiently retrieved.

Referring back to FIG. 17, in Step S98, the verification processing unit 156 substitutes -201 indicating an error for outputdata to proceed to Step S97.

In Step S93, the verification processing unit 156 judges whether or not i≤n≤2^{m} is established, and proceeds to Step S94 if i≤n≤2^{m} is established (Yes in Step S93), or to Step S99 if i=<n≤2^{m} is not established (No in Step S93).

In Step S99, the verification processing unit 156 substitutes -201 indicating an error for outputdata to proceed to Step S97.

In Step S94, the verification processing unit 156 dynamically secures an area for signature verification calculation to check whether or not the area has successfully been secured. The verification processing unit 156 proceeds to Step S95 if the area has successfully been secured (Yes in Step S94), or to Step S100 if area securing has failed (No in Step S94).

In Step S100, the verification processing unit 156 outputs -101 indicating an error to the output unit 159 to finish the processing.

In Step S95, the verification processing unit 156 performs signature verification for (*data, dataLen[2], sign[fLen], istate_p) by using the algorithm illustrated in FIG. 9.

The verification processing unit 156 releases the area secured in Step S94 (S96).

In Step S97, the verification processing unit 156 outputs 0 indicating a normal end to the output unit 159 to finish the processing.

This embodiment has been described by way of only the case where the signature of the verification target has been input. However, a case where there is no signature data added to video data may occur. For example, in a situation in which the verification device 150 is not coupled to the other devices via the network as illustrated in FIG. 1, the user may take out video data and signature data from any one of the video generation device 110, the encoder 120, the accumulation device 130, and the display device 140 to an external storage device such as a USB memory or an external HDD, and take out no signature by mistake during movement to the verification device 150, or the user may delete a signature by mistake.

When there is no signature data added to the video data as described above, a high-order function (e.g., verification processing unit 156) that loads the signature verification function according to this embodiment may check addition of no signature to display inhibition of signature verification.

As in the first embodiment, the hash function h and the hash function H illustrated in FIG. 3 may be the same hash function (e.g., SHA-256) and, in application to a real system, the hash function H and the portion of the signature generation function may be replaced by a signature method such as RSA-PSS or ECDSA to be used.

As in the first embodiment, in place of the plurality of pieces of video data M, ..., and Mₖ (k=2^{m}) described above, a predetermined value rᵢ may be used for each i (1≤i≤2^{m}) to set mᵢ=Mᵢ | | rᵢ and, with mᵢ, ..., and mₖ set as a plurality of pieces of data, signatures may be generated by the method according to this embodiment.

This embodiment has been described presuming that the data to be signed is video data. However, as in the first embodiment, other data may be used.

In this embodiment, a method used for signature generation may not be determined in Step S81 of FIG. 13. Instead, a signature method to be used may be determined beforehand, and a value corresponding to the signature method to be used may be input together with a message *Datainfo or a signing key istate_s in Step S70.

In the embodiment described above, an output value or a return value (outputdata) of signature verification may be a value different from the value according to this embodiment as long as what error has occurred can be understood based on the output value or the return value.

Thus, according to the signature method of this embodiment, by generating signatures for a plurality of pieces of video data through the hash tree structure, and calculating an index for a hash value necessary for signature verification, the signature generation and verification with high security and efficiency can be carried out corresponding to the arbitrary extraction and storage from the plurality of pieces of video data.

The embodiments described above have been described by way of example in which the signature processing units 189 and 289, and the verification processing unit 156 are realized by software. However, dedicated hardware may be used. The mathematical function computing units 190 and 157 may be realized by dedicated hardware.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. A signature device which generates a signature for each of a plurality of pieces of data, comprising a control unit,
wherein the control unit performs:
first processing of calculating a hash value from the each of the plurality of pieces of data;
second processing of repeating processing of calculating a hash value from a coupled value obtained by coupling together calculated hash values to calculate one hash value;
third processing of calculating a signature value from the one hash value by using a signing key; and
fourth processing of generating, for one piece of data contained in the plurality of pieces of data, a signature containing the signature value and all hash values each of which coupled to each of another hash value calculated including the one piece of data until the one hash value is calculated.

2. A signature device according to claim 1, wherein:
in the second processing, the coupled value is generated by coupling together two of the hash values calculated in the first processing in a predetermined order to calculate the hash value; and
the signature generated in the fourth processing contains the predetermined order.

3. A signature device according to claim 1, wherein, in the first processing, the hash value is calculated from a value obtained by coupling a predetermined value to the each of the plurality of pieces of data.

4. A signature device according to claim 3, wherein:
in the first processing, the predetermined value coupled to the each of the plurality of pieces of data comprises identification information for identifying the signature device; and
the signature generated in the fourth processing contains the identification information.

5. A signature device according to claim 3, wherein:
in the first processing, the predetermined value coupled to the each of the plurality of pieces of data comprises time information; and
the signature generated in the fourth processing contains the time information.

6. A signature device according to claim 1, wherein the control unit further performs, when a number of the plurality of pieces of data is other than a power of 2, fifth processing of setting a number of pieces of data targeted for signature value calculation to the power of 2 by generating and adding data based on an arbitrary value at least before the second processing.

7. A verification device which verifies a signature added to each of a plurality of pieces of data, comprising a control unit, wherein:
the signature of one piece of data contained in the plurality of pieces of data contains a signature value and all hash values each of which coupled to each of another hash value calculated including the one piece of data until one hash value for calculating the signature value is calculated; and
the control unit performs:
first processing of calculating a hash value from the one piece of data;
second processing of repeating processing of calculating a hash value from a coupled value obtained by coupling one of the all hash values to the calculated hash value until one hash value is calculated;
third processing of calculating one hash value from the signature value by using a verification key; and
fourth processing of verifying the one hash value calculated in the second processing and the one hash value calculated in the third processing.

8. A verification device according to claim 7, wherein:
the signature contains information for specifying an order of coupling the hash value calculated including the one piece of data to the one of the all hash values; and
in the second processing, the one hash value is calculated from a coupled value obtained by coupling the hash value calculated including the one piece of data to the one of the all hash values according to the order.

9. A verification device according to claim 7, wherein:
the signature contains information for specifying a predetermined value coupled to the one piece of data; and
in the first processing, the hash value is calculated from a value obtained by coupling the predetermined value to the one piece of data.

10. A program for causing a computer to function as the signature device of any one of claims 1 to 6.

11. A program for causing a computer to function as the verification device of any one of claims 7 to 9.

12. A signature method carried out by a signature device comprising a control unit which generates a signature for each of a plurality of pieces of data, comprising:
a first step of calculating, by the control unit, a hash value from the each of the plurality of pieces of data;
a second step of repeating, by the control unit, processing of calculating a hash value from a coupled value obtained by coupling together the calculated hash values to calculate one hash value;
a third step of calculating, by the control unit, a signature value from the one hash value by using a signing key; and
a fourth step of generating, by the control unit, for one piece of data contained in the plurality of pieces of data, a signature containing the signature value and all hash values each of which coupled to each of another hash value calculated including the one piece of data until the one hash value is calculated.

13. A verification method carried out by a verification device comprising a control unit which verifies a signature added to each of a plurality of pieces of data,
the signature of one piece of data contained in the plurality of pieces of data containing a signature value and all hash values each of which coupled to each of another hash value calculated including the one piece of data until one hash value for calculating the signature value is calculated,
the verification method comprising:
a first step of calculating, by the control unit, the hash value from the one piece of data;
a second step of repeating, by the control unit, processing of coupling one of the all hash values to the calculated hash value until one hash value is calculated;
a third step of calculating, by the control unit, one hash value from the signature value by using a verification key; and
a fourth step of verifying, by the control unit, the one hash value calculated in the second step and the one hash value calculated in the third step.

14. A system, comprising:
a signature device which generates a signature for each of a plurality of pieces of data; and
a verification device which verifies the signature generated by the signature device, wherein:
the signature device comprises a control unit which performs:
first processing of calculating a hash value from the each of the plurality of pieces of data;
second processing of repeating processing of calculating a hash value from a coupled value obtained by coupling together calculated hash values to calculate one hash value;
third processing of calculating a signature value from the one hash value by using a signing key; and
fourth processing of generating, for one piece of data contained in the plurality of pieces of data, the signature containing the signature value and all hash values each of which coupled to each of another hash value calculated including the one piece of data until the one hash value is calculated; and
the verification device comprises a control unit which performs:
fifth processing of calculating the hash value from the one piece of data;
sixth processing of repeating processing of coupling one of the all hash values to the calculated hash value until one hash value is calculated;
seventh processing of calculating one hash value from the signature value by using a verification key; and
eighth processing of verifying the one hash value calculated in the second processing and the one hash value calculated in the seventh processing.
